# EUROPÄISCHE PATENTANMELDUNG

(11) **EP 0 613 794 A1**
(43) Veröffentlichungstag der Anmeldung: **07.09.1994**
(21) Anmeldenummer: 94102589.2
(22) Anmeldetag: 21.02.1994
(51) Int. Cl.: B60C 11/11

(54) **Laufflächenprofil für Winterreifen**

(30) Priorität: 02.03.1993 DE 4306483
(71) Anmelder: PIRELLI REIFENWERKE GmbH, 64733 Höchst/Odenwald (DE)
(72) Erfinder: Weyrich, Frank, D-64732 Bad König (DE); Banerjee, Gopal, D-64739 Höchst/Odenwald (DE); Sallein, Otto, D-64747 Breuberg (DE)
(74) Vertreter: Preissner, Nicolaus, Dipl.-Ing.

(57) **Zusammenfassung**

Bei einem Laufflächenprofil für Winterreifen von Kraftfahrzeugen, insbesondere für Kraftfahrzeuge der Transporterklasse, mit mindestens zwei in Umfangsrichtung verlaufenden Rillen und querverlaufenden Rillen zur Abgrenzung von Profilblöcken ist zur Erhöhung der Wintertauglichkeit bei gleichzeitiger optimaler Seitenstabilität erfindungsgemäß vorgesehen, daß die Querrillen (5) helixartig mit einem angenähert Z-förmigen Knick (6) in der Mitte der Laufflächenbreite verlaufen und daß mindestens vier, in Umfangsrichtung verlaufende Längsrillen (1, 2, 3; 4) vorgesehen sind, deren einzelne Abschnitte zwischen zwei Querrillen (5) jeweils um mindestens eine halbe Rillenbreite abwechselnd nach links und nach rechts gegeneinander versetzt sind.

## Beschreibung

Die Erfindung bezieht sich auf ein Laufflächenprofil für Winterreifen von Kraftfahrzeugen, insbesondere für Kraftfahrzeuge der Transporterklasse, mit mindestens zwei in Umfangsrichtung verlaufenden Rillen und querverlaufenden Rillen zur Abgrenzung von Profilblöcken.

Zur Optimierung der Wintereigenschaften von Reifen ist es erforderlich, daß das entsprechende Laufflächenprofil möglichst viele querverlaufende Rillen und Kanten aufweist, die dem Profil die Flexibilität geben, um die notwendige Traktion zu erzeugen.

Diese Flexibilität des Profils wirkt sich jedoch negativ auf die Fahrstabilität aus. Eine solche Fahrstabilität wird vor allem durch große Blöcke erzielt, was aber dann wieder den erforderlichen Wintereigenschaften abträglich ist. Eine große Anzahl von Längskanten fördert jedoch die Seitenstabilität und dient gleichzeitig einer positiven Beeinflußung der Profilflexibilität.

Der vorliegenden Erfindung liegt daher die Aufgabe zugrunde, ein Laufflächenprofil zu schaffen, das neben guten Wintereigenschaften auch sehr gute Ganzjahreseigenschaften mit einer großen Fahrstabilität aufweist und dabei insbesondere für schnelle, starke Fahrzeuge der Transporterklasse dienen soll.

Zur Lösung dieser Aufgabe ist erfindungsgemäß vorgesehen, daß die Querrillen helixartig mit einem angenähert Z-förmigen Knick in der Mitte der Laufflächenbreite verlaufen und daß mindestens vier, in Umfangsrichtung verlaufende Längsrillen vorgesehen sind, deren einzelne Abschnitte zwischen zwei Querrillen jeweils um mindestens eine halbe Rillenbreite abwechselnd nach links und nach rechts gegeneinander versetzt sind.

Damit weist das Profil zahlreiche Längsrillen auf, die von besonderem Vorteil für Spurtreue, Seitenstabilität, Aquaplaning, Abriebverhalten und Geräusch sind.

Zweckmäßigerweise sind dabei die beiden mittleren Längsrillen etwa doppelt so breit wie die beiden außenliegenden Längsrillen.

Von besonderem Vorteil ist es, wenn im mittleren Bereich der Laufflächenbreite zwischen den benachbarten Abknickpunkten zweier Querrillen jeweils eine weitere Z-förmige Rille in Umfangsrichtung verläuft.

Dabei ist es zweckmäßig, wenn diese Z-förmige Rille zwei von den Querrillen-Knickpunkten zunächst in Umfangsrichtung abzweigende Rillenabschnitte und eine schräg die Mittellinie schneidende Verbindungsrille aufweist.

Dabei werden durch diese Z-förmige Mittelrille zwischen jeweils zwei Querrillen und den beiden innenliegenden Umfangsrillen zwei gleichförmige, spiegelbildlich zur Verbindungsrille liegende Mittelblöcke abgegrenzt.

Dabei können die in Umfangsrichtung verlaufenden Rillenabschnitte der Z-förmigen Rille mit Unterbrechungen durch die Mittelblöcke zwei weitere Umfangsrillen bilden.

Anhand einer schematischen Zeichnung sind Aufbau und Funktionsweise eines Ausführungsbeispiels näher erläutert. Dabei zeigen:
- Fig. 1: eine Aufsicht auf das Laufflächenprofil über einen bestimmten Umfangsbereich des Reifens und
- Fig. 2: einen vergrößerten Ausschnitt eines Mittelbereiches aus diesem Profil.

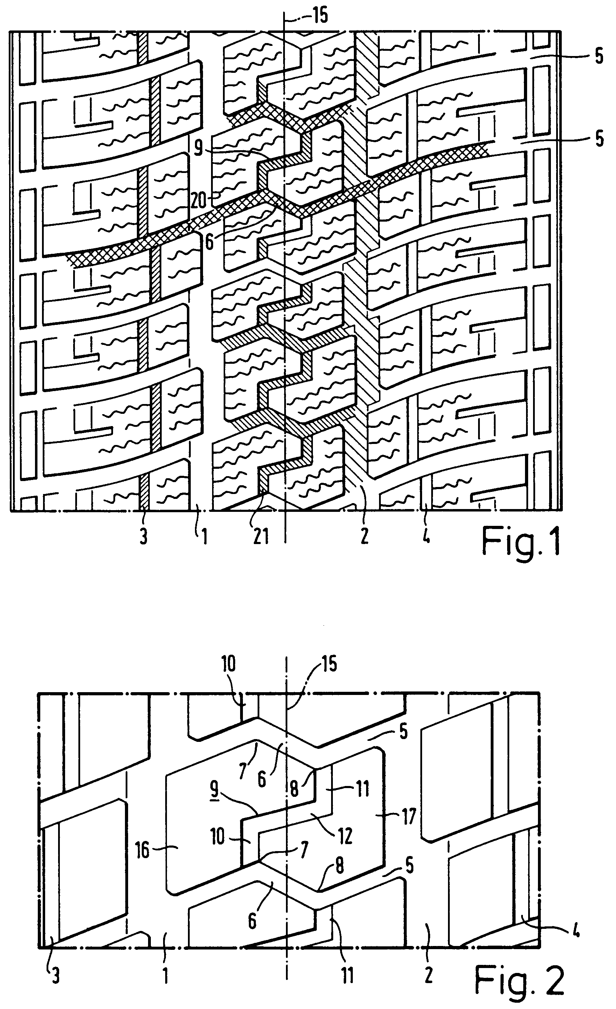

Wie ein erster Blick auf Fig. 1 vermittelt, ist das Laufflächenprofil geprägt durch vier Längsrillen, und zwar zwei mittlere, etwas breitere Rillen 1 und 2 sowie zwei außenliegende, etwas schmalere Längsrillen 3 und 4.

Diese Längsrillen 1 und 2 bzw. 3 und 4 sind unterbrochen von helixartig verlaufenden Querrillen 5, deren beide seitliche Äste in der Mitte durch einen Z-förmigen Knick 6 etwas gegeneinander versetzt und verbunden sind.

Wie man aus Fig. 1 weiter erkennt, sind die beiden innenliegenden Längsrillen 1 und 2 zwischen jeweils zwei Querrillen 5 jeweils um eine halbe Breite abwechselnd nach links und nach rechts versetzt. Im gleichen Sinne sind auch die beiden äußeren, schmaleren Längsrillen 3 und 4 zwischen jeweils zwei Querrillen 5 jeweils um eine ganze Rillenbreite abwechselnd nach links und nach rechts versetzt.

Durch diese Versetzung ergibt sich für jede einzelne Längsrille fiktiv eine sehr viel größere Breite, wodurch Spurtreue, Seitenstabilität und besseres Aquaplaning-Verhalten gefördert werden.

Wie man aus dem vergrößerten Ausschnitt nach Fig. 2 erkennt, verlaufen zwischen jeweils zwei, in etwa radialer Richtung sich erstreckenden Z-förmigen Abknickungen 6 der Querrillen 5, und zwar zwischen den jeweils am engsten zusammenliegenden Abknickpunkten 7 der einen Querrille und 8 der nächsten Querrille eine komplementäre Z-förmige Rille 9 praktisch in Umfangsrichtung, die jeweils zwei Querrillen 5 verbindet. Diese Z-förmige Rille 9 weist dabei zwei, von den Querrillen-Knickpunkten 7 und 8 zunächst in Umfangsrichtung abzweigende Rillenabschnitte 10 und 11 auf, während diese beiden Abschnitte durch eine Verbindungsrille 12 miteinander verbunden sind, die die Mittellinie 15 des Laufflächenprofils in schräger Richtung schneidet.

Durch diese Z-förmige Längsrille 9 werden somit zwischen zwei Querrillen 5 und den benachbarten Längsrillen 1 und 2 praktisch zwei gleichförmige, spiegelbildlich zur Verbindungsrille 12 liegende größere Mittelblöcke 16 und 17 abgegrenzt, die den Großteil der hervorragenden Wintereigenschaften des Reifens erzeugen.

Diese beiden Mittelblöcke 16 und 17 sind, wie sich insbesondere auch aus Fig. 1 ergibt, sowie auch alle übrigen Blöcke, noch zusätzlich mit Lamellen 20 versehen, wodurch insgesamt die Traktion optimiert ist.

Wie man insbesondere aus dem mittleren unteren Bereich der Fig. 1 erkennt, sind im enggestrichelten Bereich zwischen den Mittelblöcken 16 und 17 in Längsrichtung und Querrichtung miteinander in Verbindung stehende Z-förmige Rillen 6 und 9 vorgesehen, die insgesamt ein System darstellen, mit dem die erforderlichen Angriffskanten zur verstärkten Traktion des Reifens geschaffen sind. Dieses Z-Rillen-System 21 stellt damit auch ein optimales Entwässerungssystem für die Reifenlauffläche dar.

Schließlich ergeben die beiden in Längsrichtung verlaufenden Rillenabschnitte 10 und 11 der mittleren Z-Rille 9 praktisch zwei weitere - wenn auch abschnittsweise unterbrochene - Längsrillen parallel zu den Hauptrillen 1 und 2 bzw. 3 und 4.

Ein weiteres charakteristisches Erscheinungsbild dieses Reifens ergibt sich, wenn man die beiden äußeren Längsrillen 3 und 4 mit der Z-förmigen Mittelrille 9 zusammenfaßt, die ein weiteres prägendes Charakteristikum dieses Laufflächenprofils darstellen.

Damit ist insgesamt ein Laufflächenprofil für schnelle und starke Transporterfahrzeuge geschaffen, das neben guten Ganzjahreseigenschaften sich optimal auch für den Winterbetrieb eignet und dabei auf Schnee sehr gute Anfahr-, Handlings- und Bremswerte bei guter Traktion ergibt und das gleichzeitig einen hohen Fahrkomfort mit hoher Spurtreue und Seitenstabilität, ein verbessertes Aquaplaning-Verhalten sowie ein geringes Geräusch aufweist.

## Patentansprüche

1. Laufflächenprofil für Winterreifen von Kraftfahrzeugen, insbesondere für Fahrzeuge der Transporterklasse, mit mindestens zwei in Umfangsrichtung verlaufenden Rillen und querverlaufenden Rillen zur Abgrenzung von Profilblöcken, dadurch gekennzeichnet, daß die Querrillen (5) helixartig mit einem angenähert Z-förmigen Knick (6) in der Mitte der Laufflächenbreite verlaufen, und daß mindestens vier, in Umfangsrichtung verlaufende Längsrillen (1, 2; 3, 4) vorgesehen sind, deren einzelne Abschnitte zwischen zwei Querrillen (5) jeweils um mindestens eine halbe Rillenbreite abwechselnd nach links und nach rechts gegeneinander versetzt sind.

2. Laufflächenprofil nach Anspruch 1, dadurch gekennzeichnet, daß die beiden mittleren Längsrillen (1, 2) etwa doppelt so breit sind wie die beiden außenliegenden Längsrillen (3, 4).

3. Laufflächenprofil nach Anspruch 1, dadurch gekennzeichnet, daß im mittleren Bereich der Laufflächenbreite zwischen benachbarten Abknickpunkten (7, 8) zweier Querrillen (5) jeweils eine weitere, Z-förmige Rille (9) in Umfangsrichtung verläuft.

4. Laufflächenprofil nach Anspruch 3, dadurch gekennzeichnet, daß die Z-förmige Rille (9) zwei von den Querrillen-Knickpunkten (7, 8) zunächst in Umfangsrichtung abzweigende Rillenabschnitte (10, 11) und eine die Mittellinie (15) schräg anschneidende Verbindungsrille (12) aufweist.

5. Laufflächenprofil nach Anspruch 3 und 4, dadurch gekennzeichnet, daß durch die Z-förmige Mittelrille (9) zwischen jeweils zwei Querrillen (5) und den beiden innenliegenden Umfangsrillen (1, 2) zwei gleichförmige, spiegelbildlich zur Verbindungsrille (12) liegende Mittelblöcke (16, 17) abgegrenzt sind.

6. Laufflächenprofil nach Anspruch 4, dadurch gekennzeichnet, daß die in Umfangsrichtung verlaufenden Rillenabschnitte (10, 11) der Z-förmigen Rille (9) mit Unterbrechungen durch die Mittelblöcke (16, 17) zwei weitere Umfangsrillen bilden.

7. Laufflachenprofil nach Anspruch 1 und 3, dadurch gekennzeichnet, daß die Z-förmigen Abknickungen (6) der Querrillen (5) und die komplementären Z-Rillen (9) im mittleren Umfangsbereich ein Entwässerungssystem bilden.
